# EUROPÄISCHE PATENTSCHRIFT

(11) **EP 1 794 559 B1**
(45) Veröffentlichungstag und Bekanntmachung des Hinweises auf die Patenterteilung: **29.06.2016**
(21) Anmeldenummer: 05800703.0
(22) Anmeldetag: 28.09.2005
(51) Int. Cl.: G01K 1/08, G01K 7/16

(54) **SENSORVORRICHTUNG**
SENSOR DEVICE
SYSTEME DE CAPTEURS

(30) Priorität: 30.09.2004 DE 102004047725
(43) Veröffentlichungstag der Anmeldung: 13.06.2007
(73) Patentinhaber: EPCOS AG, 81669 München (DE)
(72) Erfinder: ARRIMADAS MATIAS, Javier, 36209 Vigo (ES); KLOIBER, Gerald, A-8073 Feldkirchen (AT); MAYER, Ralf, Thomas, 73434 Aalen (DE)
(74) Vertreter: Epping - Hermann - Fischer
(86) Internationale Anmeldenummer: PCT/DE2005/001726
(87) Internationale Veröffentlichungsnummer: WO 2006/034700

(56) Entgegenhaltungen:
- DE-A1- 10 219 011
- DE-C1- 3 733 192
- US-A- 4 317 367
- PATENT ABSTRACTS OF JAPAN Bd. 1996, Nr. 07, 31. Juli 1996 (1996-07-31) -& JP 08 068699 A (MITSUBISHI MATERIALS CORP), 12. März 1996 (1996-03-12)
- PATENT ABSTRACTS OF JAPAN Bd. 1996, Nr. 07, 31. Juli 1996 (1996-07-31) -& JP 08 068698 A (MITSUBISHI MATERIALS CORP), 12. März 1996 (1996-03-12)

## Beschreibung

Die Erfindung betrifft eine Sensorvorrichtung, die z. B. einen Temperaturfühler aufweist.

Sensorvorrichtungen mit oberflächenmontierbaren Temperatursensoren sind z. B. aus den Druckschriften US 6,588,931 B2 und US 6,431,750 B1 bekannt.

Aus der Druckschrift JP 08068699 ist ein mit einer Harzbeschichtung bedeckter Temperatursensor auf einem flexiblen Substrat bekannt.

Die Druckschrift DE 102 19 011 A1 offenbart einen Temperatursensor, der einen folienisolierten Flachbandleiter mit integrierten Leiterbahnen umfasst.

Die Druckschrift DE 37 33 192 C1 betrifft einen Temperatursensor mit keramischen Folien, die im Gegensatz zur Erfindung nicht flexibel sind. Auch hier ist das Sensorelement in derselben Metalllage wie seine Zuleitungen ausgebildet.

Aufgabe der Erfindung ist es, eine Sensorvorrichtung anzugeben, die einen platzsparenden Fühlkopf aufweist.

Diese Aufgabe wird durch eine Sensorvorrichtung gemäß Anspruch 1 gelöst. Vorteilhafte Ausgestaltungen der Erfindung sind aus weiteren Ansprüchen zu entnehmen.

Die Erfindung gibt eine Sensorvorrichtung mit einer flexiblen ersten Folie an, deren erste Oberfläche strukturierte Leiterbahnen (elektrische Zuleitungen) aufweist. Die Leiterbahnen sind elektrisch mit einem Fühler verbunden, der auf der ersten Oberfläche der ersten Folie liegend angeordnet und darauf befestigt ist. Liegend bedeutet hier, dass eine der größten Flächen des Fühlers zur Oberfläche der ersten Folie gewandt ist, wobei der Fühler auf der ersten Folie flach aufliegt. Der Fühler weist vorzugsweise oberflächenmontierbare Außenkontakte auf, die jeweils mit einer Leiterbahn oder einer diese Leiterbahn kontaktierenden, auf der Oberfläche der ersten Folie angeordneten Anschlussfläche fest verbunden, vorzugsweise verlötet sind.

Auf die Oberseite der ersten Folie ist eine flexible zweite Folie aufgebracht, die den Fühler von oben formschlüssig umhüllt und dicht gegen die erste Oberfläche der ersten Folie abschließt. Die flexible zweite Folie weist mehrere Teilschichten einschließlich einer elektromagnetisch abschirmenden Schicht auf und die zur ersten Folie gewandte Teilschicht ist eine Klebeschicht. Damit ist der Fühler in dem zwischen der ersten und der zweiten Folie gebildeten Hohlraum verkapselt und gegen Umwelteinflüsse wie z. B. Feuchtigkeit und Verschmutzung geschützt. Die Erfindung hat den Vorteil, dass auf eine zusätzliche Häusung des so gebildeten Fühlkopfes verzichtet werden kann.

Der Fühler kann z. B. aus einer PTC- oder NTC-Keramik bestehen (PTC = positive temperature coefficient, NTC = negative temperature coefficient). Der Fühler stellt vorzugsweise ein flaches oberflächenmontierbares Bauelement mit einer geringen Höhe und SMD-Kontakten (SMD = surface mounted device) dar. Der Fühler kann aber auch ein bedrahtetes Bauelement oder ein Bauelement mit einer krimpbaren Kontaktierung sein. Die Höhe des Fühlers ist vorzugsweise kleiner als 1 mm und kann z. B. 100 µm betragen. Die SMD-Kontakte des Fühlers sind vorzugsweise auf seiner zur ersten Folie gewandten Unterseite angeordnet.

Die Leiterbahnen sind in einer strukturierten Metallschicht ausgebildet. Dafür ist insbesondere ein thermisch gut leitendes Metall wie Kupfer geeignet.

Die erste und/oder zweite Folie können z. B. Polyimidfolien, Polyesterimid- (PEI) oder andere flexible dielektrische Folien sein. Es ist vorteilhaft, die erste und die zweite Folie bzw. ihre dielektrischen Teilschichten aus dem gleichen Material zu wählen.

Die zweite und gegebenenfalls auch die erste Folie weisen mehrere Teilschichten auf, die zusammen einen flexiblen Schichtverbund bilden. Mindestens eine der Teilschichten ist dabei dielektrisch. Vorteilhaft ist zur Verbindung der ersten und der zweiten Folie eine Klebeschicht, die z. B. im Verbund der zweiten Folie als die unterste Teilschicht enthalten sein kann. Eine der - vorzugsweise äußeren - Teilschichten der der zweiten und gebenenfalls auch der ersten Folie ist elektrisch leitend und gegen elektromagnetische Felder abschirmend. Die elektromagnetische Abschirmung des Fühlers und der zu ihm führenden Leiterbahnen ist insbesondere bei Hochfrequenzanwendungen der Sensorvorrichtung von Vorteil, da die metallischen Bestandteile der Sensorvorrichtung als Antenne wirken und bei Integration in ein HF-Gerät unerwünschte HF-Störungen einfangen können.

Die erste Folie umfasst in einer Variante eine dielektrische Teilschicht, die mittels einer Klebeschicht mit der strukturierten Metallschicht fest verbunden ist, wobei der Verbund der Metallschicht, der Klebeschicht und der dielektrischen Teilschicht flexibel ist.

Die bei Raumtemperatur vorzugsweise zähfließende Klebeschicht wird zwischen der dielektrischen Teilschicht der zweiten Folie und der Oberfläche der ersten Folie aufgetragen und dann bei einer hohen Temperatur, z. B. 200°C ausgehärtet, wobei sie auch nach dem Aushärten flexibel bleibt.

Die Dicke der ersten bzw. zweiten Folie kann z. B. ca. 25 bis 50 µm betragen.

Die Sensorvorrichtung kann in einer Variante ein kompaktes, flexibles Sensorbauelement darstellen. Möglich ist es auch, die Sensorvorrichtung in einem weiteren Gerät, z. B. einer Klimaanlage zu integrieren.

Im folgenden wird die Erfindung anhand von Ausführungsbeispielen und der dazugehörigen Figuren näher erläutert. Die Figuren zeigen anhand schematischer und nicht maßstabsgetreuer Darstellungen verschiedene Ausführungsbeispiele der Erfindung. Gleiche oder gleich wirkende Teile sind mit gleichen Bezugszeichen bezeichnet. Es zeigen schematisch ausschnittsweise
Figur 1 den Querschnitt einer beispielhaften Sensorvorrichtung;
Figur 2 die Ansicht der Sensorvorrichtung gemäß Figur 1 von oben;
Figur 3 den Querschnitt einer weiteren Sensorvorrichtung, bei der die erste und die zweite Folie mehrere Schichten aufweist;
Figur 4 den Querschnitt einer weiteren Sensorvorrichtung mit in der ersten Folie verborgenen Leiterbahnen und abschirmenden Teilschichten;
Figur 5 die Ansicht der Sensorvorrichtung gemäß Figur 4 von oben.

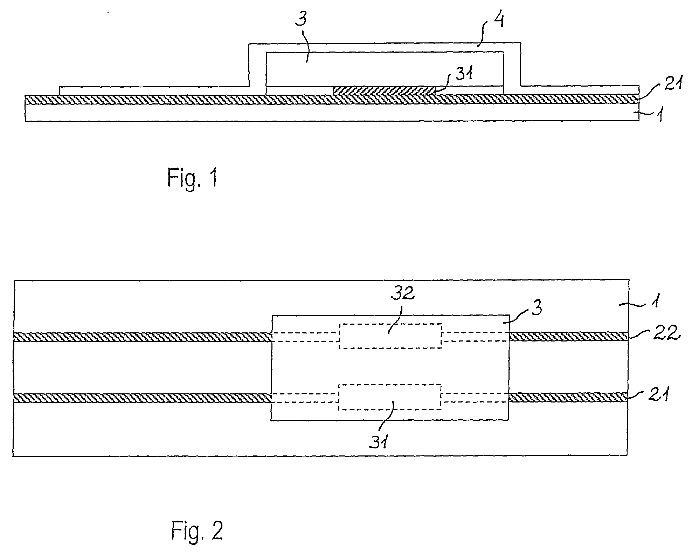

Figuren 1, 2 zeigen verschiedene Ansichten einer ersten Sensorvorrichtung, die eine erste Folie 1, eine darauf angeordnete Metallschicht mit darin strukturierten Leiterbahnen 21, 22 und einen Fühler 3 mit auf seiner Unterseite angeordneten oberflächenmontierbaren Anschlüssen 31, 32 aufweist. Auf der Rückseite des Fühlers 3 ist eine zweite Folie 4 auflaminiert, die auch an den Seitenflächen des Fühlers anliegt und allseitig dicht mit der Oberseite der ersten Folie 1 abschließt. Die zweite Folie 4 überdeckt außerdem die elektrisch mit dem Fühler 3 verbundenen Leiterbahnen 21, 22.

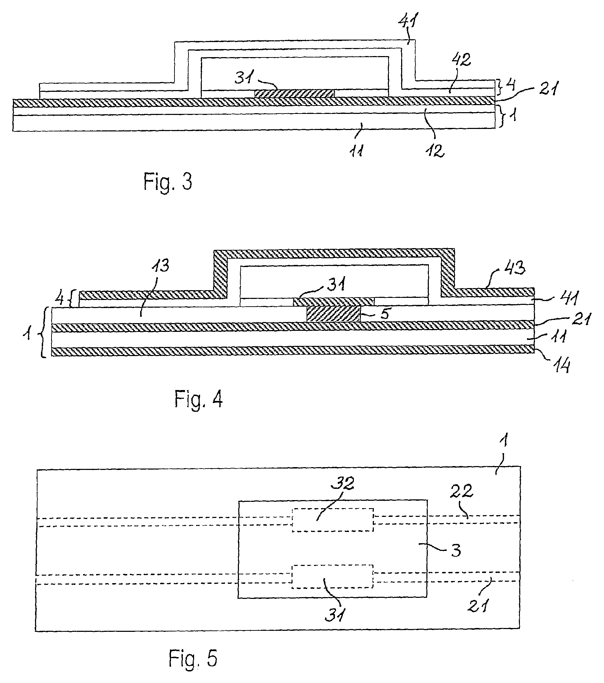

Die erste Folie 1 umfasst eine dielektrische Schicht, z. B. die Teilschicht 11 in Figur 3, und ist z. B. eine Cu-kaschierte Polyimidfolie, wobei die geätzte Kupferschicht mit der Polyimidfolie z. B. mittels einer in Figur 3 dargestellten Klebeschicht 12 fest verbunden ist. Die Teilschichten 11, 12 bilden zusammen einen flexiblen Verbund.

Die zweite Folie 4 umfasst eine dielektrische Schicht, z. B. die Teilschicht 41 in Figur 3. Auf der Unterseite der Teilschicht 41 ist eine Klebeschicht 42 angeordnet, die die Haftung zwischen der Teilschicht 41 und der Oberseite der ersten Folie 1 bzw. der zur zweiten Folie 4 gewandten Oberfläche des Fühlers 3 gewährleistet. Die Teilschichten 41, 42 bilden zusammen einen flexiblen Verbund.

In Figuren 1 und 3 ist die strukturierte Metallschicht mit den Leiterbahnen 21, 22 auf der Oberseite der ersten Folie 1 angeordnet. In Figur 4 ist eine Variante vorgestellt, in der die strukturierte Metallschicht zwischen zwei dielektrischen Teilschichten 11 und 13 angeordnet ist. Damit sind die zu dem Fühler führenden elektrischen Zuleitungen 21, 22 im Inneren der ersten Folie 1 verborgen. Die verborgenen Leiterbahnen 21, 22 sind von außen über vertikale elektrische Verbindungen - die Durchkontaktierungen 5 - kontaktierbar. Die Durchkontaktierungen 5 sind fest mit den Außenanschlüssen 31, 32 des Fühlers 3 verbunden.

In der in Figur 4 gezeigten Variante ist die oberste bzw. nach außen gewandte Teilschicht der zweiten Folie 4 durch eine elektromagnetisch abschirmende Teilschicht 43, beispielsweise eine Kupferschicht gebildet. Die unterste bzw. nach außen gewandte Teilschicht der ersten Folie 1 ist durch eine elektromagnetisch abschirmende Teilschicht 14, beispielsweise eine Kupferschicht gebildet.

Die Draufsicht auf die in Figur 4 gezeigte Sensorvorrichtung ist in Figur 5 zu sehen. Die verborgenen Leiterbahnen 21, 22 sowie die Außenanschlüsse 31, 32 des Fühlers 3 sind durch gestrichelte Linien dargestellt.

Obwohl die Erfindung anhand nur weniger Ausführungsbeispiele dargestellt werden konnte, ist sie auf diese nicht beschränkt. Die Elemente verschiedener Ausführungen können beliebig miteinander kombiniert werden. Es können grundsätzlich beliebige geeignete Materialien bzw. Materialverbunde sowie beliebige Schichtdicken einzelner Teilschichten des Gesamtaufbaus verwendet werden.

### Bezugszeichenliste

- 1: erste Folie
- 11: dielektrische Teilschicht der ersten Folie 1
- 12: Klebeschicht
- 13: dielektrische Teilschicht der ersten Folie 1
- 14: abschirmende Teilschicht der ersten Folie 1
- 21, 22: strukturierte Leiterbahnen
- 3: Fühler
- 31, 32: elektrische Anschlüsse des Fühlers 3
- 4: zweite Folie
- 41: dielektrische Teilschicht der zweiten Folie 4
- 42: Klebeschicht
- 43: abschirmende Teilschicht der zweiten Folie 4
- 5: Durchkontaktierung

## Patentansprüche

1. Sensorvorrichtung
mit einer flexiblen ersten Folie (1), die strukturierte Leiterbahnen (21, 22) aufweist,
mit einem elektrisch mit den strukturierten Leiterbahnen (21, 22) verbundenen Fühler (3), der auf der ersten Oberfläche der ersten Folie (1) liegend angeordnet und fest damit verbunden ist,
mit einer flexiblen zweiten Folie (4), die den Fühler (3) von oben formschlüssig umhüllt und dicht gegen die erste Oberfläche der ersten Folie (1) abschließt, wobei die zweite Folie (4) mehrere Teilschichten (41, 42, 43) aufweist und die zur ersten Folie (1) gewandte Teilschicht der zweiten Folie (4) eine Klebeschicht (42) ist, **dadurch gekennzeichnet, dass** eine Teilschicht in dem die zweite Folie (4) bildenden Verbund eine elektromagnetisch abschirmende Schicht (43) ist.

2. Sensorvorrichtung nach Anspruch 1,
wobei die Leiterbahnen (21, 22) auf der ersten Oberfläche der ersten Folie (1) angeordnet sind,
wobei die zweite Folie (4) die strukturierten Leiterbahnen (21, 22) überdeckt.

3. Sensorvorrichtung nach Anspruch 1 oder 2,
wobei der Fühler (3) ein Temperatursensor ist.

4. Sensorvorrichtung nach Anspruch 3,
wobei der Fühler (3) ein oberflächenmontierbarer Thermistor mit zur ersten Oberfläche der ersten Folie (1) gewandten Außenkontakten (31, 32) ist.

5. Sensorvorrichtung nach Anspruch 3,
wobei der Fühler (3) ein bedrahteter Thermistor ist.

6. Sensorvorrichtung nach Anspruch 3,
wobei der Fühler (3) eine krimpbare Kontaktierung aufweist.

7. Sensorvorrichtung nach einem der Ansprüche 1 bis 6,
wobei die erste Folie (1) mehrere Teilschichten (11, 12, 13) aufweist.

8. Sensorvorrichtung nach Anspruch 7,
wobei eine der Teilschichten (11, 12, 13, 14) der ersten Folie (1) eine elektromagnetisch abschirmende Schicht (14) ist.

9. Sensorvorrichtung nach Anspruch 7 oder 8,
wobei die Leiterbahnen (21, 22) in einer zwischen zwei dielektrischen Schichten (11, 13) angeordneten, strukturierten Metallschicht ausgebildet sind,
wobei in mindestens einer der dielektrischen Schichten (13) zur Kontaktierung der Leiterbahnen (21, 22) geeignete Durchkontaktierungen (5) angeordnet sind.

## Claims

1. Sensor device
comprising a flexible first film (1) having structured conductor tracks (21, 22), comprising a probe (3), which is electrically connected to the structured conductor tracks (21, 22) and which is arranged in a manner lying on the first surface of the first film (1) and is fixedly connected thereto,
comprising a flexible second film (4), which envelops the probe (3) from above in a positively locking manner and tightly seals it relative to the first surface of the first film (1), wherein the second film (4) has a plurality of partial layers (41, 42, 43) and that partial layer of the second film (4) which faces the first film (1) is an adhesive layer (42), **characterized in that** a partial layer in the composite forming the second film (4) is an electromagnetically screening layer (43).

2. Sensor device according to Claim 1,
wherein the conductor tracks (21, 22) are arranged on the first surface of the first film (1), wherein the second film (4) covers the structured conductor tracks (21, 22).

3. Sensor device according to Claim 1 or 2,
wherein the probe (3) is a temperature sensor.

4. Sensor device according to Claim 3,
wherein the probe (3) is a surface-mountable thermistor having external contacts (31, 32) facing the first surface of the first film (1).

5. Sensor device according to Claim 3,
wherein the probe (3) is a wired thermistor.

6. Sensor device according to Claim 3,
wherein the probe (3) has a crimpable contact-connection.

7. Sensor device according to any of Claims 1 to 6,
wherein the first film (1) has a plurality of partial layers (11, 12, 13).

8. Sensor device according to Claim 7,
wherein one of the partial layers (11, 12, 13, 14) of the first film (1) is an electromagnetically screening layer (14).

9. Sensor device according to Claim 7 or 8,
wherein the conductor tracks (21, 22) are formed in a structured metal layer arranged between two dielectric layers (11, 13),
wherein plated-through holes (5) suitable for contacting the conductor tracks (21, 22) are arranged in at least one of the dielectric layers (13).

## Revendications

1. Dispositif de détection
comprenant une première membrane (1) souple, laquelle possède des pistes conductrices (21, 22) structurées, comprenant une sonde (3) reliée électriquement aux pistes conductrices (21, 22) structurées, laquelle est disposée en position horizontale sur la première surface de la première membrane (1) et est reliée fixement à celle-ci,
comprenant une deuxième membrane (4) souple qui enveloppe la sonde (3) par le dessus par complémentarité de formes et se ferme hermétiquement contre la première surface de la première membrane (1), la deuxième membrane (4) possédant plusieurs couches partielles (41, 42, 43) et la couche partielle de la deuxième membrane (4) qui fait face à la première membrane (1) étant une couche adhésive (42), **caractérisé en ce qu'**une couche partielle dans la composition qui forme la deuxième membrane (4) est une couche (43) réalisant un blindage électromagnétique.

2. Dispositif de détection selon la revendication 1, avec lequel les pistes conductrices (21, 22) sont disposées sur la première surface de la première membrane (1), la deuxième membrane (4) recouvrant les pistes conductrices (21, 22) structurées.

3. Dispositif de détection selon la revendication 1 ou 2, avec lequel la sonde (3) est une sonde de température.

4. Dispositif de détection selon la revendication 3, avec lequel la sonde (3) est une thermistance qui peut être montée en surface munie de contacts externes (31, 32) dirigés vers la première surface de la première membrane (1).

5. Dispositif de détection selon la revendication 3, avec lequel la sonde (3) est une thermistance câblée.

6. Dispositif de détection selon la revendication 3, avec lequel la sonde (3) possède un système de contact sertissable.

7. Dispositif de détection selon l'une des revendications 1 à 6, avec lequel la première membrane (1) possède plusieurs couches partielles (11, 12, 13).

8. Dispositif de détection selon la revendication 7, avec lequel l'une des couches partielles (11, 12, 13, 14) de la première membrane (1) est une couche (14) réalisant un blindage électromagnétique.

9. Dispositif de détection selon la revendication 7 ou 8, avec lequel les pistes conductrices (21, 22) sont formées dans une couche métallique structurée disposée entre deux couches diélectriques (11, 13), des contacts traversants (5) appropriés étant disposés dans au moins l'une des couches diélectriques (13) en vue d'établir le contact avec les pistes conductrices (21, 22).
